# EUROPEAN PATENT APPLICATION

(11) **EP 3 079 117 A1**
(43) Date of publication of application: **12.10.2016**
(21) Application number: 16305423.2
(22) Date of filing: 11.04.2016
(51) Int. Cl.: G06Q 40/04

(54) **PLATFORM FOR HANDLING MULTILATERAL OVER THE COUNTER TRANSACTIONS**

(30) Priority: 10.04.2015 US 201514683624
(71) Applicant: Smartpills, 75002 Paris (FR)
(72) Inventor: FERET, Emmanuel, 75002 Paris (FR); THABAUT, Jonathan, 75002 Paris (FR)
(74) Representative: Nicolle, Olivier

(57) **Abstract**

In an implementation, a method for handling OTC transaction requests in real time is described. The method includes receiving one or more structured orders from a plurality of users, determining strategy trees corresponding to the structured orders, determining, by the OTC transaction platform, in real time, all matching orders among said plurality of structured orders for maximizing a cumulative volume of OTC transactions, wherein the matching orders comprise a first and a second set of instruments having compatible market prices and reverse trade directions, and wherein each logical rule defined by each of the nodes of the matching orders is satisfied.

## Description

### TECHNICAL FILED

The present subject matter relates, in general, to Over the Counter (OTC) transactions and, in particular, to handling OTC transactions in a multilateral environment.

### BACKGROUND

Over the Counter (OTC) transactions generally take place on platforms other than standard stock exchanges. OTC transactions include commodities, tangible products, tangible goods, services, stocks and other financial instruments, such as derivatives and bonds, traded via a dealer network and not on a public centralized exchange platform. For conducting OTC transactions, brokers/ dealers may directly communicate with each other over phone or a private limited computer network.

The present subject matter relates to a transaction platform and method for handling Over the Counter (OTC) transactions and, in particular, for handling structured OTC transactions in real time in a multilateral environment.

Conventional multilateral OTC trading platforms are offered by brokers and usually require a user to install specific software for trading. Usually such trading platforms allow users to trade financial instruments such as swaptions, by using single instrument transactions or in rare cases different transaction strategies/types such as spreads treated as single specific instruments. They do not match efficiently user orders containing diverse transaction types because they cannot break down such orders into logical rules nor guaranty that the best transaction combination, if any, will be found among any achievable configuration due to combinatorial explosion and possible trades in chain reaction. During a trading session, a user can usually view a grid of standard instruments and mid-market prices for placing an order. Generally, existing OTC trading platforms do not offer users with the flexibility to define OTC orders containing multiple legs of different transaction types and also do not offer suggestions for maximizing transaction volumes. Further, even the processing time required for determining possible trades is large since single instrument transactions are matched individually, whereas it is desirable to have the transactions conducted in real time.

Thus, existing OTC platforms cannot efficiently operate in a multilateral environment that connects multiple users, are not scalable as they have large processor and memory overheads, and cannot process multiple complex transaction orders holistically or in real time, nor can the existing OTC platforms provide any analytical capabilities to the multilateral environment for handling the transaction orders in the multilateral environment.

### SUMMARY OFTHE INVENTION

It is an object of the present invention to provide a method that implements a platform for handling versatile structured OTC transactions in real time in a multilateral environment.

To this end, according to the invention, there is provided a method, implemented by an OTC transaction platform and executed by a processor of a server implementing the OTC transaction platform, for handling OTC transaction requests in real time, the method comprising:
receiving, by the processor of the server, one or more structured orders from a plurality of computing devices, each order comprising one or more instruments of a transaction type corresponding to an instrument class, and a trade direction of each instrument;
determining, by the processor of the server, one or more parameters corresponding to each instrument of each of the structured orders, the one or more parameters comprising at least a size and a market price of an instrument;
determining, by the processor of the server, strategy trees corresponding to the structured orders, each strategy tree depicting one or more logical relations among each instrument in the corresponding structured order, wherein each strategy tree comprises one or more nodes defining logical rules, trade directions, and size ratio rules, and further comprises one or more instruments as leaves of the tree;
determining, by the processor of the server, in real time, all matching orders among said plurality of structured orders for maximizing a cumulative volume of OTC transactions, wherein the matching orders comprise a first and a second set of instruments having compatible market prices and reverse trade directions, and wherein each logical rule defined by each of the nodes of the matching orders is satisfied.

Moreover, the method is easy to use with minimal user expertise. In particular, the method allows a user to define flexible structured orders having multiple legs of instruments through a graphical user interface. An instrument is for example a financial contract that can be bought or sold between two counterparts at an agreed price. It may be described by several features such as starting date, ending date, interest rate, underlying instrument in case of a derivative one, and so on depending on the contract type. An outright order is defined as a buy or sell order on a single instrument. A structured order is defined as a set of instruments to be bought or sold, linked with logical rules. The structured order is considered executed if every logical rule is satisfied. For instance, a spread order is a particular kind of structured order where one instrument must be bought and another instrument must be sold simultaneously. A structured order can be further described in terms of its legs, which are the different buy and sell positions. A spread order consists in a long leg (i.e. instrument to buy) and a short leg (i.e. instrument to sell).

The structured orders are converted into corresponding strategy trees for efficient processing of the orders. Each strategy tree comprises one or more nodes defining logical rules, trade directions, and size ratio rules, and further comprises one or more n-dimensional objects, corresponding to instruments, as leaves of the tree. Thus, any complex structured order can be broken down into a set of logical rules between instruments embedded in a strategy tree. Converting the structured orders into strategy trees and instruments into objects allows for better memory usage, more efficient processing, and faster storage and retrieval, thereby allowing real time holistic handling of multiple complex orders. It is important to note that a structured order according to the invention is not always dedicated to a financial OTC transaction but can be also dedicated to an OTC transaction on tangible goods and products.

Further, based on the strategy tree, the one or more legs of the structured orders defined by multiple users can be matched in real time for maximizing transaction volumes, thus guaranteeing the best solution, if any. Moreover, if a match for a user's order is not obtained, the user can be provided with suggestions for modifying one or more parameters of the order for obtaining a match and completing the OTC transaction with respect to any feature of the order. For this, for each instrument, admissible neighborhoods can be determined and, based on the set of logical rules between instruments embedded in a strategy tree, matching of orders and prompting for modification can be accomplished. Thus, additional intelligence can be provided in the multilateral transaction environment for increasing the number of transactions.

According to another object of the invention, there is also provided an OTC transaction platform comprising a graphical user interface (GUI) for receiving structured orders comprising one or more instruments of a transaction type corresponding to an instrument class, the GUI comprising:
a first area depicting a grid having a plurality of cells representing selectable instruments corresponding to parameters depicted by row and column headers of the grid and a third parameter embedded in each cell being displayed upon an unfolding of the cell, wherein selection of one or more cells depicts selection of corresponding instruments in a structured order for an OTC transaction;
a second area displaying a selected structured order comprising one or more instruments having one or more parameters and a trade direction corresponding to each selected instrument, the instrument parameters and trade directions being editable by a user; and
a third area displaying: one or more selected structured orders comprising one or more instruments and corresponding instrument parameters; an editable status; a completion ratio corresponding to each order; and an interactive area corresponding to each displayed structured orders for suggesting the user to modify one or more parameters of one or more instruments corresponding to a structured order for obtaining a matching order, the suggestion being provided in real time based on an existing market configuration.

According to another preferred embodiment, it is provided various graphical user interfaces (GUIs) that allow users to interact with the OCT platform efficiently for placing, modifying, and completing transactions. In addition to providing orders through the GUIs, users can also receive prompts, indications, and suggestions from the platform, through the GUIs, for conducting the transactions.

The invention further relates to a server comprising:
a processor;
a GUI front end module, coupled to the processor, to receive one or more structured orders from a plurality of users, each order comprising one or more instruments of a transaction type corresponding to an instrument class, and a trade direction of each instrument;
a trading services module, coupled to the processor, to determine one or more parameters corresponding to each instrument of each of the structured orders, the one or more parameters comprising at least a size and a market price of an instrument; and
a matching engine, coupled to the processor, to
   determine strategy trees corresponding to the structured orders, each strategy tree depicting one or more logical relations among each instrument in the corresponding structured order, wherein each strategy tree comprises one or more nodes defining logical rules, trade directions, and size ratio rules, and further comprises one or more instruments as leaves of the tree; and
   determine, in real time, all matching orders among said plurality of structured orders for maximizing a cumulative volume of OTC transactions, wherein the matching orders comprise a first and a second set of instruments having compatible market prices and reverse trade directions, and wherein each logical rule defined by each of the nodes of the matching orders is satisfied.

While the description has been provided with specific example of swaptions, it will be understood that the systems and methods can be implemented to conduct any type of OTC transaction, in which two parties agree on how a particular trade or agreement is to be settled in the future, such as commodities, tangible objects (tangible products, tangible goods, skills, services) and intangible objects (swap, forwards, options, and derivatives), where the underlying asset may be of any type, for example, components, pieces, skills, people, interest rates, stocks, currency, etc., and the transaction strategy may include one or more instruments, such as bid, auction, spread, butterfly, straddle, strangle, collar or any other option combination.

### BRIEF DESCRIPTION OF DRAWINGS

These and other aspects of the systems and methods are described in detail with reference to the appended figures. The systems and the methods described herein may be implemented in a variety of networked computing environments employing various computing devices and network elements. It should be noted that the description and figures merely illustrate the principles of the present subject matter. It is thus understood that various arrangements can be devised that, although not explicitly described or shown herein, embody the principles of the present subject matter. Moreover, all statements herein reciting principles, aspects, and embodiments of the present subject matter, as well as specific examples thereof, are intended to encompass equivalents thereof.

The detailed description is provided with reference to the accompanying figures. In the figures, the left-most digit(s) of a reference number identifies the figure in which the reference number first appears. The same numbers are used throughout the drawings to reference like features and components.
**Figure 1A** illustrates a networked environment for handling OTC transactions, according to an implementation of the present subject matter.
**Figure 1B** illustrates an example server implementing an OTC transaction platform, according to an implementation of the present subject matter.
**Figure 1C** illustrates an example dataflow in the networked environment, according to an implementation of the present subject matter.
**Figure 2A** illustrates a method for handling OTC transactions, according to an implementation of the present subject matter.
**Figure 2B** illustrates an example order handling process flow diagram, according to an implementation of the present subject matter.
**Figures 3A-3E** illustrate exemplary strategy trees, according to an implementation of the present subject matter.
**Figure 4A** illustrates exemplary schemes for matching instruments having reverse trade directions, according to an implementation of the present subject matter.
**Figure 4B** illustrates exemplary schemes for determining admissible neighborhoods, according to an implementation of the present subject matter.
**Figures 5A-5C** illustrate screenshots of the GUIs for conducting OTC transactions, according to an implementation of the present subject matter.
**Figure 6** depicts exemplary interactive areas that may be displayed to a user for providing suggestions for modifying/editing one or more parameters of one or more instruments corresponding to a structured order for obtaining a matching order.
**Figure 7** illustrates a table 700 for determining market size of an instrument for an OTC transaction, according to an implementation of the present subject matter.

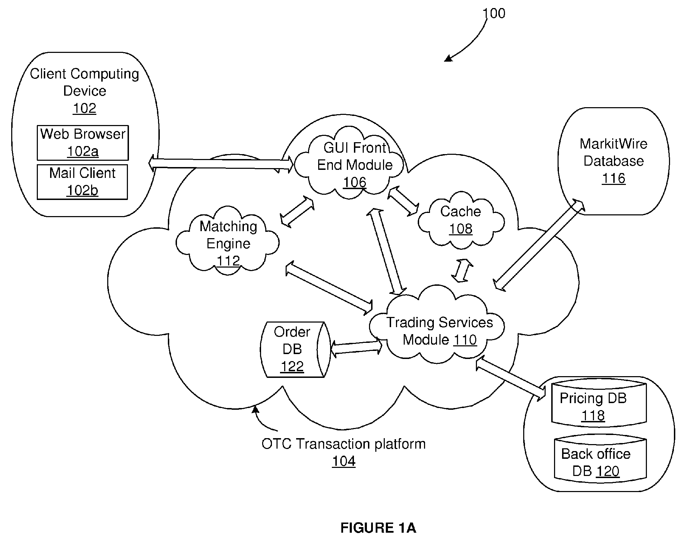

**Figure 1A** schematically illustrates a networked environment 100 for handling OTC transactions, according to an implementation of the present subject matter.

The networked environment 100 includes a client computing device 102, such as a desktop, laptop, a mobile device, and the like. The client computing device 102 includes a web browser for communicating with an OTC transaction platform 104. It will be understood that while a single client computing device 102 has been illustrated for discussion purposes, there will be a plurality of client computing devices in communication with the OTC transaction platform 104 for carrying out trades between multiple users.

The OTC transaction platform 104 includes a graphical user interface (GUI) front end module 106, a cache 108, a trading services module 110, a matching engine 112, and a database 114. The OTC transaction platform 104 can be hosted as a single computing system or as a distributed system, for example, over a cloud network. In case of the OTC transaction platform 104 being hosted as a distributed system, it can be implemented on multiple computing systems, such as servers, computing devices, and databases. Further, the various components of the OTC transaction platform 104, such as the graphical user interface (GUI) front end module 106, the cache 108, the trading services module 110, the matching engine 112, and the database 114, may be implemented on one or more computing systems and some of the components may share the same computing system and its resources.

Further, while not shown herein, it will be understood that the client computing device 102 and the various computing systems that host the OTC transaction platform 104 will include various hardware components, such as processors, memory, I/O interfaces, network interfaces, and the like.

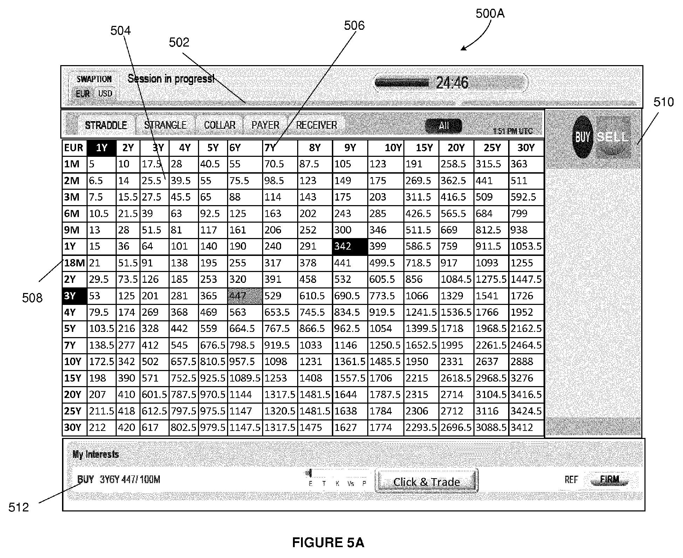

In operation, the GUI front end module 106 provides a GUI front end that is rendered onto the web browser running on the client's computing device 102 and is used to obtain orders for financial instruments to be traded by the user. The GUI front end is further described with reference to Figs. 5A-5C, 6, and 7. User inputs to the GUI front end module 106, received through the GUI front end, are temporarily stored in the memory cache 108 and processed by the trading services module 110.

The trading services module 110 communicates with a standard financial market database such as the MarkitWire database, which is used to exchange trade data and confirm over-the-counter (OTC) transactions to achieve straight through processing. The trading services module 110 serves to exchange information among the MarkitWire database 116, a pricing database 118, a back office database 120, an order database (DB) 122, the matching engine 112, the cache 108, and the GUI front end module 106.

The GUI front end module 106 allows a user to define structured orders for an OTC transaction on different classes of instruments such as swaps, swaptions, etc., corresponding multiple instrument types such as payer, receiver, straddles and corresponding strategies such as collars, strangles, spreads, butterflies, etc. A structured order may contain multiple legs, each comprising one or more instruments with a logical trade relationship among the legs. A user may select a transaction type corresponding to an instrument class for an OTC transaction order to be placed via the GUI front end module 106. For example, the user can specify that the placed transaction order corresponds to a collar, straddle, strangle, etc.

A structured order selected by a user via the GUI front end provided by the GUI front end module 106 comprises at least a trade direction of each instrument in the order which may be one of a buy or a sell direction and one or more order parameters such as, but not limited to, a strike price of each instrument in the order. The trading services module 110 allows the user to edit/modify a selected structured order by providing the user, via the GUI front end, a second set of parameters fully describing the order. The second set of parameters comprises a standard market size, a set of sensitivities and a reference price for each instrument in the order. The second set of parameters is calculated by using the pricing database 118.

Once the structured order is confirmed by a user via the GUI front end, the order is loaded on to the order database 122 by the trading services module 110. The trading services module 110 communicates with the order database 122 for storage and retrieval of the confirmed orders and also communicates the confirmed orders and corresponding order parameters to the matching engine 112.

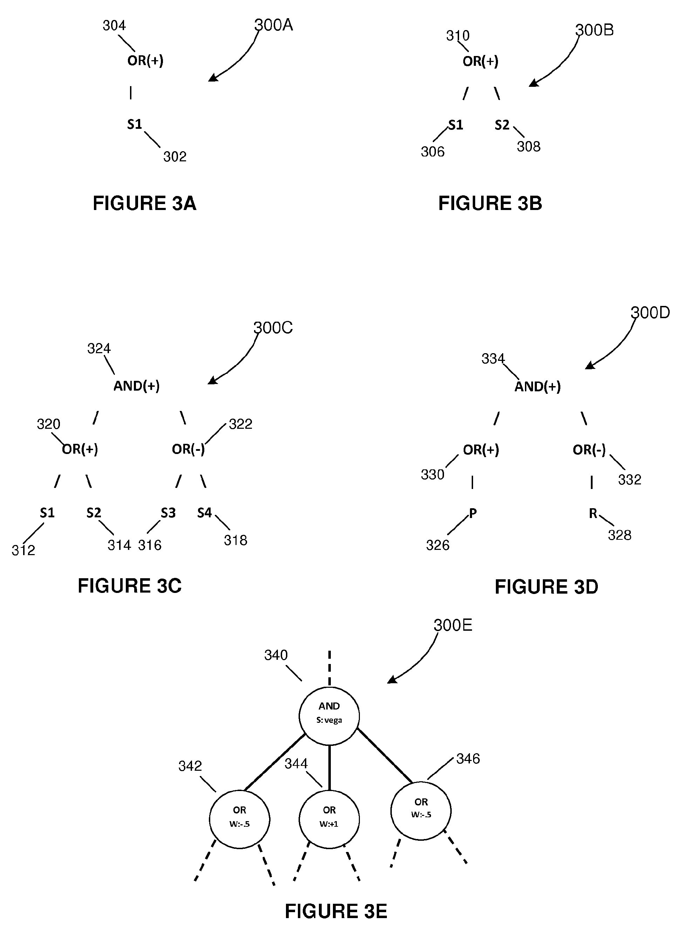

The matching engine 112 prepares a strategy tree defining logical relationships between each instrument in a structured order with respect to a plurality of structured orders corresponding to a plurality of users in real time. A strategy tree depicts a user's structured order and the corresponding transaction strategy and may comprise multiple nodes depicting the instruments contained in the order and the logical relationships among the instruments. Size ratios rules, via sensitivity and weighting schemes are defined among the branches of the tree based on the transaction and strategy type of the order. The strategy trees are further described with reference to Figure 3A-3E.

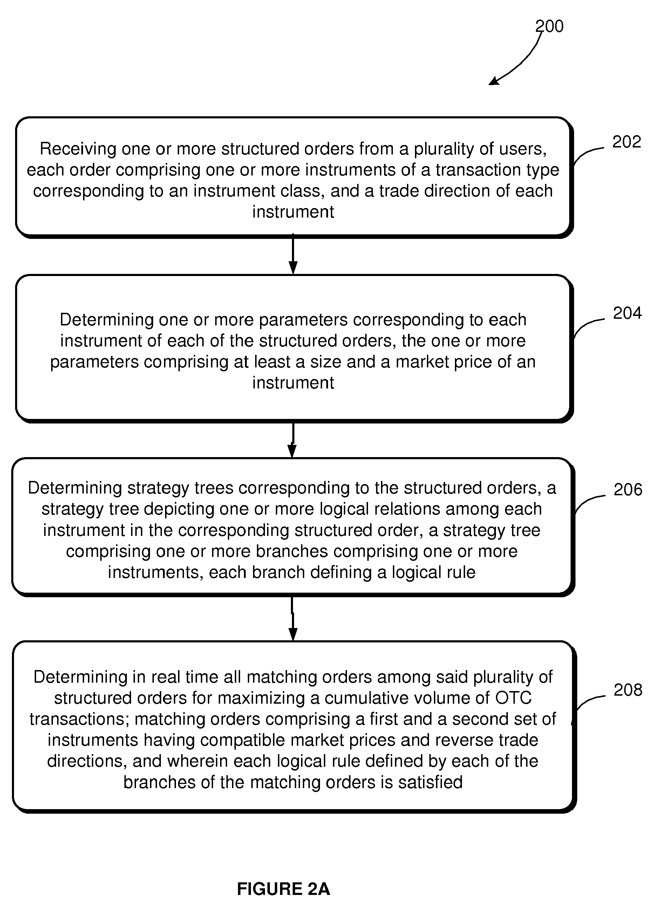

The matching engine 112 also determines matching orders from among a plurality of structured orders in real time by using the corresponding strategy trees, for maximizing an OTC transaction volume in the networked environment 100. For obtaining matching orders, the order parameters of the instruments of a first order having a first trade direction are required to be identical to the order parameters of the instruments of a second order having a reverse trade direction, while satisfying every logical relationship among the instruments as defined by the corresponding strategy trees of the orders. For example, if a structured order contains a single instrument, then an OTC transaction of the order is completed if a matching instrument having a reverse trade direction and a compatible price is found in real time. If a structured order contains two or more instruments then OTC transactions of each of the instruments are completed, if corresponding matching instruments having reverse trade directions and compatible prices are found in real time with respect to each of the two or more instruments and if every logical rule is satisfied. The matching instrument(s) may be found in a single matching order or in a plurality of matching orders. Accordingly, a cumulative volume of OTC transactions for the received orders can be maximized. The matching of structured orders is further described later with reference to Figs. 2A-2B, 3A-3E and 4A-4B.

Once a matching order corresponding to a user selected structured order is found, the same is communicated for transaction completion to the user, via the client computing device 102. In an implementation of the subject matter, the completion of an OTC transaction by determination of a matching order is communicated to the user via the web browser 102a. In another implementation the user may be notified of an OTC transaction completion via an email sent through a mail client 102b installed on the client computing device 102 and through a MarkitWire notification.

In case a matching instrument is not found, the matching engine 112 can also determine whether there are similar orders that may get fulfilled if the users slightly modify the orders. For this, an admissible neighborhood within which the similar orders should lie is defined and if the variation between orders is less than the maximum variation defining the admissible neighborhood, the orders are identified to be similar orders. In such a case, the matching engine 112 can communicate to the GUI front end module 106 to provide a prompt for order modification to the client computing devices 102 from which the similar orders were received. The prompt can include an indication as to which order may be modified for the trade to occur. The users can accordingly provide one or more modified orders as new orders, which will be received by the trading services module 110 and processed by the matching engine 112 as described above. Thus, the total number of completed transactions in a trading session can also be maximized.

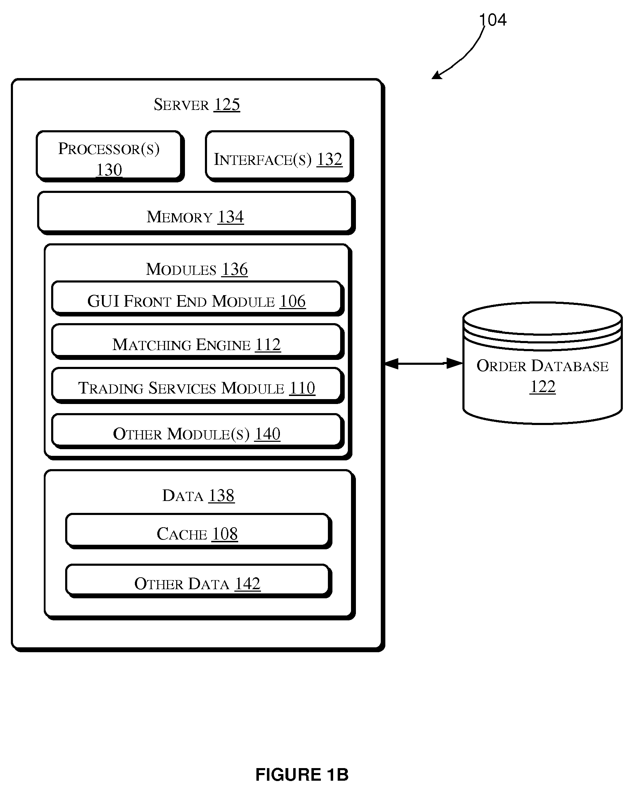

**Figure 1B** illustrates an example server 125 in communication with the order database 122, for implementing the OTC transaction platform 104, according to an implementation of the present subject matter. While various modules are shown as a part of the example server 125, it will be understood that the OTC transaction platform 104 can be implemented on a distributed system, and hence the server 125 may be a distributed server in other implementations.

In one example, the server 125 includes processor(s) 130, interface(s) 132, memory 134, modules 136, and data 138. It will be understood that the server 125 may be implemented as any suitable computing system known in the art, such as a desktop, a laptop, a server, and the like.

The processor(s) 130 can be a single processing unit or a number of units, all of which could include multiple computing units. The processor(s) 104 may be implemented as one or more microprocessors, microcomputers, microcontrollers, digital signal processors, central processing units, state machines, logic circuitries, and/or any devices that manipulate signals based on operational instructions. Among other capabilities, the processor(s) 130 is configured to fetch and execute computer-readable instructions and data stored in the memory 134 and modules 136.

The functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage.

The interface(s) 132 may include a variety of software and hardware interfaces, for example, interfaces for peripheral device(s), such as a keyboard, a mouse, an external memory, and a printer. The interface(s) 132 can also facilitate multiple communications within a wide variety of networks and protocol types, including wired networks, for example, local area network (LAN), cable, etc., and wireless networks, such as Wireless LAN (WLAN), cellular, or satellite. For the purpose, the interface(s) 132 may include one or more ports for connecting a number of devices to each other or to another computing system.

The memory 134 may include any computer-readable medium including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In one implementation, processor(s) 130 is coupled to modules 136 and database 138. In another implementation, the modules 136 and database 138 may reside in the memory 134 and the memory 134 may be coupled to the processor(s) 104. The modules 136 may be implemented as hardware modules, software modules, firmware modules, or a combination of these. Amongst other things, the modules 136 can implement routines, programs, objects, components, data structures, etc., which perform particular tasks or implement particular abstract data types. The database 138 serves, amongst other things, as a repository for storing data processed, received, and generated by the modules 136, where the data may be fetched by the processor(s) 130.

In one implementation, as illustrated, the modules 136 include the GUI front end module 106, the matching engine 112, the trading services module 110, and other module(s) 140. The other module(s) 140 can include various applications for operation of the server 125, such as operating system.

The data 138 may include the cache 108 and other data 142. The other data 122 includes data generated as a result of the execution of one or more modules. In one example, though not shown herein, some or all of the data in the cache 108 can be stored in a separate database that can be accessed by the server 125. The operations of the various modules of the server 125 have been discussed with reference to figure 1A and are further discussed below with reference to the remaining figures.

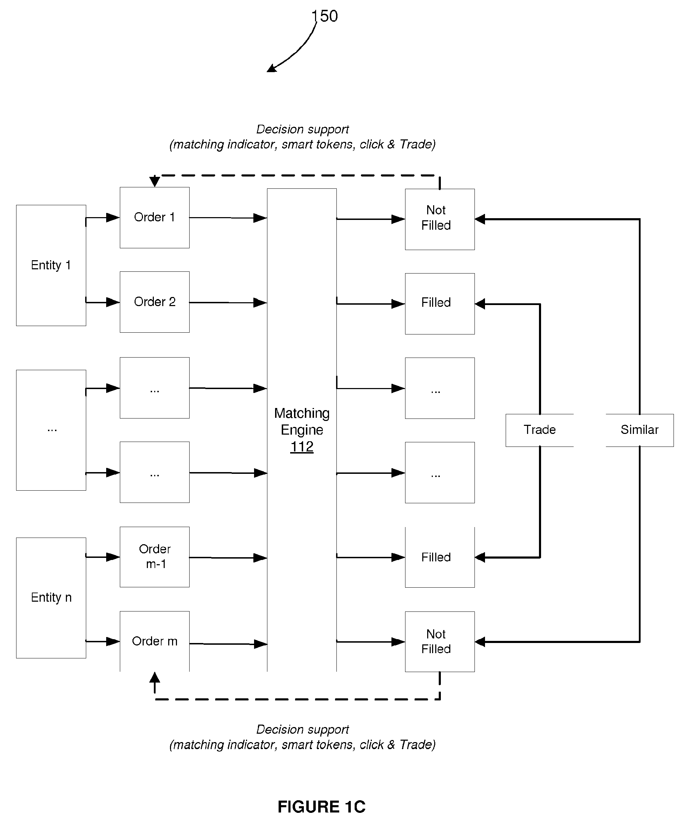

**Figure 1C** illustrates an example dataflow 150 in the networked environment 100, according to an implementation of the present subject matter.

As shown, various entities, entity 1...entity n may provide orders, such as order 1, order 2...order m-1, order m, to the platform 104. The entities may be client computing devices 102 used by various users for placing the orders through GUIs provided by the platform 104. As discussed above, each order may be a structured order comprising one or more legs having instruments. The orders may be converted into strategy trees by the matching engine 112 and may be processed to determine which orders match, i.e., where transactions can occur.

As mentioned above, the matching is done holistically across the orders and so, the matching orders comprise a first and a second set of instruments having compatible market prices and reverse trade directions, and wherein each logical rule defined by each of the nodes of the matching orders is satisfied. Thus, apart from a one-to-one matching, a one-to-many, many-to-one, and many-to-many matching may also be determined. Accordingly, one order may be fulfilled by multiple orders or multiple orders may be fulfilled by one order or a first set of orders may be fulfilled by a second set of orders. The matching engine 112 can thus determine which orders can be filled and which cannot be filled. The trade is then conducted for the orders that can be filled. However, for the orders that cannot be filled, the matching engine 112 also determines which orders are similar orders that can be completed if modified by the user. For the similar order, an indication may be provided in a prompt to the user to modify the order, thus acting as a decision support mechanism for the user. A set of "smart tokens", when highlighted, indicate which instrument parameter (including price) or logical rule should be modified for the order to match, considering opposite orders in the admissible neighborhood and every relevant constraints. When orders are close enough, the exact expected modification is prompted, with a "Click & Trade" button to update the order accordingly.

**Figure 2A** illustrates a method 200 for handling OTC transaction requests in real time, according to an implementation of the present subject matter. The method 200 may be implemented by the OTC transaction platform 104 and, in one example, by the processor(s) 130 of the server 125 in conjunction with the various modules 136.

At step 202, one or more structured orders is received from a plurality of users. In an implementation the structured orders are received by prompting users to make selections in a graphical user interface accessed by the users through client computing devices. Each order includes one or more instruments of a transaction type corresponding to an instrument class. While receiving structured orders, a trade direction of each instrument in the order is also received. Users can select the trade direction of each selected instrument of an order while placing the order. In an implementation users may also select a first set of parameters including a price, term and expiry of a selected instrument. In one example, the structured orders may be received from the client computing devices 102 by the GUI front end module 106. The GUI enabling instrument and parameter selection is further described with reference to Figure 5A-5C.

At step 204, one or more parameters corresponding to each instrument of each of the structured orders are determined, defining a second set of parameters. In an implementation, the second set of parameters includes at least a size and a market price of each instrument in an order. In an implementation, the second set of parameters includes a standard market size, a set of sensitivities and a reference price for each instrument in the order. The second set of parameters is calculated by using a standard instrument database and a market pricing database. In one example, the second set of parameters may be computed by the trading services module 110.

For example, in case of a swaption transaction class and a payer swaption transaction type, a user may select a structured order via a GUI by selecting multiple instruments therein along with a first set of parameters including an expiry, a tenor and a strike of each instrument. The second set of instrument parameters corresponding to the first set of user selected instrument parameters may include a standard market size for the first selected instrument, a set of sensitivities and a reference price for each instrument determined, for example by using a pricing database.

At step 206, strategy trees corresponding to the structured orders are determined. A strategy tree depicts a user's structured order and the corresponding transaction strategy and may comprise multiple nodes depicting the instruments contained in the order and the logical relationships among the instruments. A trade sensitivity is defined among the branches of the tree based on the transaction type of the order. In an implementation of the present subject matter, a strategy tree depicts one or more logical relations among each instrument in the corresponding structured order and comprises one or more branches having one or more instruments, where each branch defines a logical rule among the instruments of the corresponding structured order. In one example, the strategy tree may be determined by the matching engine 112. The strategy trees are further described with reference to Figs. 3A-3E.

At step 208, all matching orders from among a plurality of received structured orders are determined in real time for maximizing a cumulative volume of OTC transactions. In an implementation, matching orders comprise a first and a second set of instruments having compatible market prices and reverse trade directions, and wherein each logical rule defined by each of the nodes of the corresponding strategy trees is satisfied. In one example, the matching orders are determined by the matching engine 112.

In an implementation of the present subject matter, when a user defines a structured order comprising multiple instruments, a prompt may be provided to add one or more instruments or to alter one or more parameters of the selected instrument so that all order constraints can be satisfied, for every instrument transaction that may take place. For example, if a user defines a spread order, wherein both legs of the spread structured order must be simultaneously satisfied; the user may be prompted to improve a price for the first leg and expand the expiry dimension for the second leg, thus adding a new instrument to the structured order.

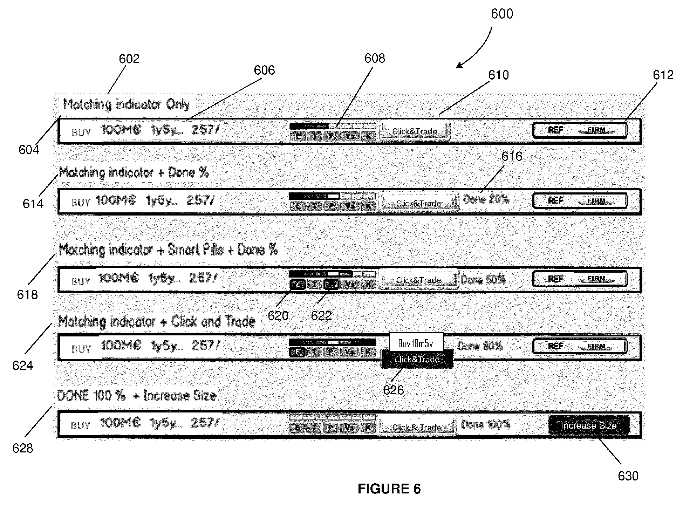

In an implementation, a group of users may be prompted to individually adjust their orders so that they may trade altogether. In an implementation of the present subject matter, the matching of instruments in real time is performed by using mathematical techniques such as combinatorial optimization and suggestions by computational geometry, machine learning, etc. The various prompts and suggestions may be determined by the matching engine 112 and the trading services module 110, and may be provided to the client computing device 102 by the GUI front end module 106. Suggestions for modifying a selected structured order may be provided via an interactive area on a GUI, as described with reference to Figure 6, displayed by the client computing device 102 to the user.

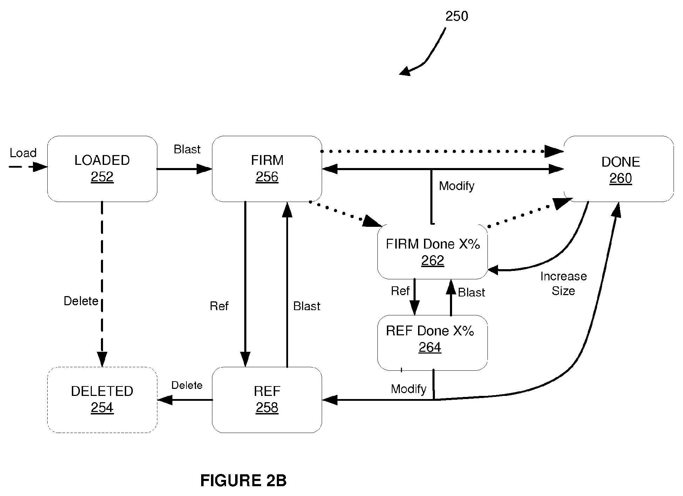

**Figure 2B** illustrates an example order handling process flow 250, according to an implementation of the present subject matter. Certain activities in the process flow 250 may be done at anytime by a user, certain activities may be done by a user only while a trading session is in progress, and certain activities may be carried out automatically by the platform 104 while the trading session is in progress. A trading session, as understood, is the window of time during which transactions can be carried out in a day. Further, the activities may be carried out when the user clicks on or selects corresponding buttons on the GUI provided to the user.

At block 252, a structured order can be loaded onto the platform 104 by the user at anytime by clicking on a "load" button on the GUI. Typically, the GUI will include an interactive area in which the user can select and/or edit an order to be placed and, after the user is satisfied that all legs and instruments of the order have been correctly entered, the user can click the "load" button to load the order onto the platform 104. This can be done at anytime and even before a trading session begins. After the order is loaded, it can also be deleted at anytime by the user by clicking on a "delete" button on the GUI in which case the order is marked as deleted as shown in block 254. On deletion, the order is no longer visible to the user, but may be archived for future reference.

The loaded order can be made "Firm" by clicking on a "blast" button, as shown at block 256. Until the loaded order is made firm, there is no matching or transaction carried out by the platform 104. On the status change to "Firm", the platform 104 does not need any further user confirmation for processing the order. The order status can be changed to "Firm" by the user while a trading session is in progress.

Moreover, the status of a firm order can be changed to "Ref" by clicking on a "Ref" button at anytime during the trading session and before execution of the order as shown at block 258. The "Ref" status indicates that the order is under review by the user and no further processing is to be done without confirmation from the user. An order having "Ref" status may be deleted as shown in block 254 or may be modified and again made "firm" as shown in block 256. The toggling between a "firm" order and "ref" order and deletion of a "ref" order can be done at anytime during a trading session. Further as can be seen, while a "Ref" order may be deleted, a "Firm" order may not be directly deleted without changing into a "Ref" order.

A "Firm" order is processed by the platform 104 automatically while a trading session is in progress and hence, in case a matching order is found, the firm order gets automatically executed and gets converted to a "done" order as shown in block 260. The determination of a matching order and prompting, and execution of the order are performed by the platform 104 as discussed earlier. In some cases, the order may be partially executed, for example, x % is executed, and so status of the order is changed to "Firm Done X%" as shown in block 262, which then changes to "Done" as shown in block 260 on complete execution. This can happen automatically while the trading session is in progress. Further, once an order is executed, i.e., becomes "Done", the user may wish to execute more amount of the same order and so can increase the size of a "Done" order, in which case the "Done" order becomes "Firm Done X %" and again gets automatically processed for the additional size.

In case the unexecuted part of a "Firm Done X%" order is to be modified, by clicking the "Ref" button, the status changes to "Ref Done x %" after which the order can be modified or firmed without modification. In case the unexecuted order is modified, it becomes a new "Ref" order that is to be then made "Firm" for matching and execution. In one example, to modify the "Ref Done X %" order, the user is allowed to increase the order in size, but not to change any parameters or reduce the size. In case the order is not modified, the status can be changed back to "Firm Done X %" by clicking on the blast button, after which it will again get automatically processed and executed if a matching order is found. A firm order can be modified directly, without changing to ref: the blast button immediately applies the modification in the market.

In case there is no match or partial match found for a firm order in a trading session, the order remains unexecuted or partially executed at the end of the trading session. In such a case, in one example, the unexecuted orders and the unexecuted parts of partially executed orders may be carried forward to the next trading session. In another example, the unexecuted orders and the unexecuted parts of partially executed orders may be deleted and the user will be asked to load orders afresh in the next trading session.

Thus the platform 104 provides flexibility to the user to load, firm, review, modify, and delete orders at various stages.

**Figures 3A-3E** illustrate exemplary strategy trees, according to an implementation of the subject matter. A strategy tree corresponding to each structured order is determined for determining matching orders from among a plurality of received structured orders. A structured order may comprise one or more instruments of a transaction type. A strategy tree depicts a user's structured order and the corresponding transaction strategy, and may comprise multiple nodes depicting the instruments contained in the order and the logical relationships among the instruments. A trade sensitivity is defined among the nodes of the tree based on the transaction type of the order. In an implementation of the present subject matter, a strategy tree depicts one or more logical relations among each instrument in the corresponding structured order and comprises one or more nodes having one or more instruments, where each node defines a logical rule among the instruments of the corresponding structured order.

Figure 3A depicts a strategy tree 300A corresponding to a structured order having an instrument 302 with a buy trade direction. The instrument 302 may be of any transaction type such as a straddle of a swaption transaction class. Tree 300A comprises a node 304 depicting the trade direction of the instrument 302 which forms a leaf node of the tree 300A.

**Figure 3B** depicts a strategy tree 300B corresponding to a structured order comprising instruments 306 and 308 with buy trade directions and having an OR logical relationship there between, indicating purchase of either of the two instruments 306 and 308. Tree 300B comprises two branches, each comprising one of the instruments 306 and 308 as a leaf node. The two branches alight from a node 310 depicting the trade directions of the instruments 306, 308 and the logical relationship, which is an OR relationship, between the two instruments 306, 308.

**Figure 3C** depicts a strategy tree 300c corresponding to a structured order having instruments 312, 314, 316 and 318. The instruments may belong to a transaction type such as a spread straddle, wherein either of the instruments 312 and 314 with a buy trade direction are to be purchased and either of the instruments 316 and 318 with a sell trade direction are to be sold. The tree 300C comprises a node 320 having two branches, each comprising one of the instruments 312 and 314 as a leaf node. The node 320 depicts the trade directions of the instruments 312, 314 and the logical relationship, which is an OR relationship between the instruments 312 and 314. The tree 300C also comprises a node 322 having two branches, each comprising one of the instruments 316 and 318 as a leaf node. The node 322 depicts the trade directions of the instruments 316 and 318 and the logical relationship, which is an OR relationship between the instruments 316 and 318. A primary node 324 depicts a logical relationship, which is an AND relationship, between the two nodes 320 and 322 and the respective branches of the two nodes 320, 322.

**Figure 3D** depicts a strategy tree 300D corresponding to an exemplary structured order for a purchase collar strategy, having an instrument 326 corresponding to a payer swaption and an instrument 328 corresponding to a receiver option, wherein the order is defined for buying the instrument 326 corresponding to a payer swaption and selling the instrument 328 corresponding to a receiver option. The strategy tree 300D comprises nodes 330 and 332 having a branch each, with the instruments 326 and 328 forming a respective leaf node. The nodes 330 and 332 depict the trade direction of the instruments 326 and 328 respectively and a logical relationship, which is an OR relationship. A primary node 334 of the tree 300D depicts a logical relationship, which is an AND relationship between the two nodes 330 and 332 and a corresponding trade direction.

In an implementation of the present subject matter, nodes of a strategy tree are overlaid with a plurality of indicators for providing information, such as but not limited to, a meaning of the subsequent nodes and branches of the strategy tree, a logical relationship among the subsequent nodes, a type of trade sensitivity among the various branches of the tree, and a weight of the branches of the tree.

**Figure 3E** depicts a strategy tree 300E illustrating an example use of logical trees with additional properties, embedding such information as sensitivity and weighting rules. Specifically, Figure 3E depicts a strategy tree 300E corresponding to a butterfly scheme, with relevant sensitivity and weighting rules. In cases of straddles, the relevant sensitivity rule between instrument sizes is the vega of options, measuring their exposition to the volatility risk factor. A butterfly is then defined as a long position in a center instrument and two short positions in "wing" instruments. Total risk must be cancelled and both lateral legs must be risk balanced. So the butterfly rule, which can be a part of a more complex scheme, is depicted in 300E where the AND node 340 indicates that every OR child node (342, 344, 346) must be satisfied, with a sensitivity rule S among branches. Moreover, the relative sensitivity contribution of each OR node is defined by its weight W. Defining W=1 for the center instrument in node 344, and W=-.5 for each wing instrument shown in nodes 342 and 346 completely defines the risk balance of a butterfly.

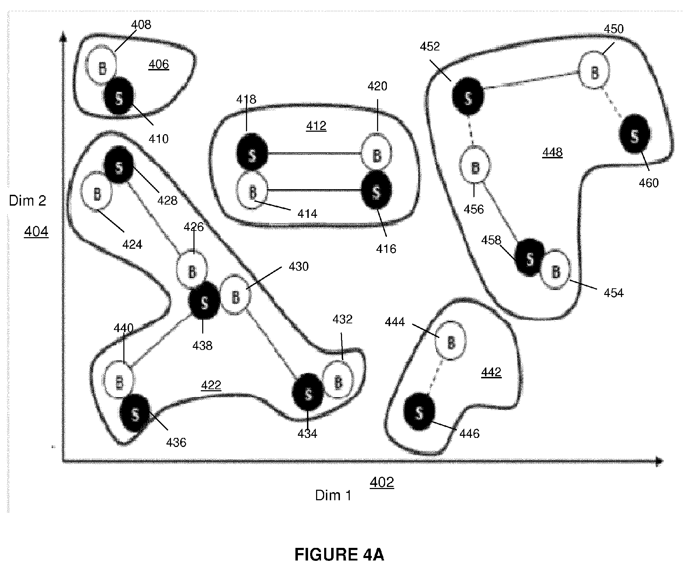

**Figure 4A** illustrates exemplary schemes for matching instruments having reverse trade directions, according to an implementation of the present subject matter. The matching schemes illustrated in Figure 4A corresponds to orders having at least two dimensions, wherein a first dimension 402 is depicted along an x axis and a second dimension 404 is depicted along a y axis. A first scheme 406 illustrates that an outright order comprising an instrument 408 having a buy trade direction matches exactly with another outright order comprising an instrument 410 having a sell trade direction, if the parameters of the instrument 408 and 410 are identical. A second scheme 412 illustrates that a spread order having an instrument 414 with a buy trade direction and an instrument 416 with a sell trade direction matches with another spread order having an instrument 418 with a sell trade direction and an instrument 420 with a buy trade direction, if the parameters of instruments 414 and 418 are identical and the parameters of instruments 416 and 420 are identical.

An exemplary matching scheme 422 illustrates that structured orders comprising instruments depicting a combination of outright and spread orders are matched globally in real time by using the method of the present subject matter, to satisfy every leg of every structured order. Scheme 422 illustrates a case where a first spread order comprising instruments 426 and 428 with buy and sell trade directions, a second spread order comprising instruments 430 and 434 with buy and sell trade directions, a third spread order comprising instruments 440 and 438 with buy and sell trade directions and three outright (i.e. simple) orders comprising instruments 424, 432 and 436 with respective buy, buy and sell trade directions are matched together as parameters of instrument 424 are identical with parameters of instrument 428, parameters of instrument 432 are identical with parameters of instrument 434, parameters of instrument 436 are identical with parameters of instrument 440, and a cumulative of the parameters of instruments 426 and 430 are identical with the parameters of instrument 438. Hence, scheme 422 depicts a case where a sell leg comprising the instrument 438 of the third order satisfies a buy leg comprising the instrument 430 of the second order as well as a buy leg comprising the instrument 426 of the first order, thereby leading to matching of all six orders.

Another exemplary matching scheme 442 illustrates a case where a first and a second outright order comprising an instrument 444 with a buy trade direction and an instrument 446 with a sell trade direction respectively do not match as the parameters of the instruments 444 and 446 are not identical. In an implementation of the present subject matter, if the parameters of the instruments 444 and 446 are within an admissible neighborhood implying that the values of the respective parameters lie within a permissible range of each other, a suggestion for modification of one or more of the parameters may be provided to a user, in order to cause the first and second orders to match. In an implementation, the suggestion may be provided via a GUI illustrating an interactive area that depicts each parameter requiring modification. An exemplary interactive area with several cases is illustrated in Figure 6, according to an implementation of the present subject matter.

Another exemplary matching scheme 448 illustrates a first spread order comprising an instrument 450 with a buy trade direction and an instrument 452 with a sell trade direction; a second spread order comprising instruments 456 with buy trade directions and an instrument 458 with a sell trade direction; a third outright order comprising an instrument 460 with a sell trade direction and a fourth outright order comprising an instrument 454 with a buy trade direction and the same parameters as instrument 458. Scheme 448 depicts a case where no OTC transactions can occur as the first, second and third orders do not match, as parameters of the instruments 452 and 456 and parameters of instruments 450 and 460 are not identical, but lie within an admissible neighborhood implying that the values of the respective parameters lie within a permissible range of each other. Hence, in an implementation a suggestion for modification of one or more of the parameters may be provided to one or more users, in order to cause the first order to match the second and the third orders. The suggestion may be provided via a GUI depicting an interactive area described with reference to Figure 6.

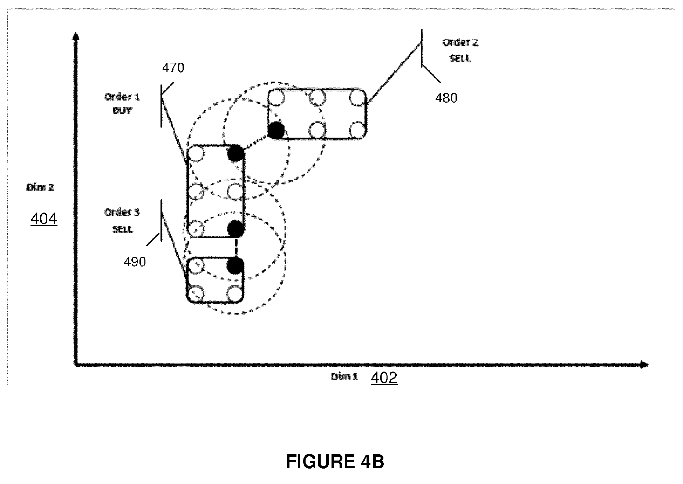

**Figure 4B** illustrates exemplary schemes for determining admissible neighborhoods, according to an implementation of the present subject matter. The matching schemes illustrated in **Figure 4B** corresponds to orders having at least two dimensions, wherein a first dimension 402 is depicted along an x axis and a second dimension 404 is depicted along a y axis.

**Figure 4B** illustrates three orders, where Order1 470 is a BUY order, made of 6 possible instruments (OR condition), Order2 480 is a SELL order, made of 6 possible instruments (OR condition), Order3 490 is a SELL order, made of 4 possible instruments (OR condition). To define the admissible neighborhood of an instrument, each of its dimensional parameter is first transformed via a specific scaling function, so that the following two conditions are satisfied: (1) It may capture the subjective resemblance of parameters for each dimension. For example, there are less subjective differences between a 25Y tenor and a 30Y tenor than between a 1Y tenor and a 6Y tenor; and (2) Relative contributions are identical across dimensions. For example, some subjective difference in prices must be comparable to some subjective difference between tenors to define n-dimensional neighborhoods.

After scaling, a metric is defined via a Minkowski norm to set admissible neighborhoods, which will take the shape of a circle in case of 2 dimension instruments (doted circles in the above example) or an n-sphere in case of n dimension instruments, when the Minkowski exponent is set to 0.5. The higher the exponent, the more it penalizes differences between instruments where many dimensions are involved. Scaling function parameters and Minkowski exponent are initially set according to the subjective view of market practitioners and are then updated in a machine learning rule. To be specific, if some prompt is applied with a proportion p' inferior to the required level p, the corresponding parameter will be progressively updated in order to shrink the neighborhood until the right proportion be achieved. Doing this, the admissible neighborhood will be more stringent; the frequency of this prompt will decrease and it will be more targeted so that its application rate will rise up to the required level. Conversely, if the observed proportion is too high, the admissible neighborhood must be loosened.

Thus, for example, in case of a swaption payer, 3 dimensions are needed to completely define the instrument (expiry, tenor, strike) and 1 additional dimension is needed to define the price, so that the admissible neighborhood lies in a 4D volume. The admissible neighborhood of an order is then defined as the union of the admissible neighborhoods of its instruments.

In the 2D example shown in Figure 4B, one instrument of order 2 and one instrument of order 3 lie in the admissible neighborhood of Order1 470. More specifically, the bottom left instrument of Order2 480 and the top right instrument of Order3 490 are considered to lie in the admissible neighborhood. In this configuration, the GUI area corresponding to dimension 1 and 2 would be lighted up in an interactive area to prompt the user that a modification can lead to a trade, as Order1 470 could be "stretched" in either dimension to meet another order (dimension 1 and 2 to meet Order2 480 or dimension 2 only to meet Order3 490).

Moreover, in one implementation, the nearest order is defined, based on the minimal distance between an order and the other orders in its admissible neighborhood. If this distance is below a threshold, a click and trade information may be provided, to prompt the user to add the corresponding instrument to its current selection, thus matching his order. In the example shown in **Figure 4B****,** the user that posted Order1 470 could be prompted to add the instrument detected in the top right corner of Order3 480, leading to a matching of Order1 470 and Order3 480.

As discussed above, the OTC transaction platform 104 provides a GUI to each user, through the GUI front end module 106, for providing inputs, receive prompts, perform trades, etc. In an implementation of the present subject matter, the GUI is provided to a user for enabling the user to define structured orders comprising one or more instruments of a transaction type corresponding to an instrument class and receive prompts. The GUI provides the user with a tool for easy definition and submission of orders for OTC transactions. Figures 5A-5C illustrate screenshots of the GUIs for conducting OTC transactions, according to an implementation of the present subject matter.

**Figure 5A** illustrates a screenshot 500A comprising a first area 502 depicting a grid having a plurality of cells 504 representing financial instruments of a class of instruments, such as but not limited to, swaptions. In an alternative, the over-the-counter transaction is dedicated to a particular trade or agreement which is not financial for example pieces or components of tangible products. Each cell 504 displays a reference price for an instrument of the class corresponding to a first set of instrument parameters fully describing the instrument and depicted by the row, the column headers 506 and 508 of the grid respectively. In an implementation, each instrument depicted by each cell 504 is also described by a third dimension embedded in each cell, which is available upon unfolding the cell. For example, if a user selects a payer transaction for a swaption, the row headers 506 specify a range of expiries representing a first dimension, and the column header 508 specifies a range of tenors representing a second dimension, for a given strike depicted in any cell 502. If two instruments differ in one of three dimensions, the two instruments are placed in contiguous cells in the first area 502 of the GUI. This allows users to compare prices of the various instruments in cells 504 easily. In an implementation a user may be allowed to select a different strike from among a plurality of available strikes which can be viewed upon unfolding the corresponding cell. If a user selects another strike, he may unfold the cell to display the range of available strikes. The first, second and third dimensions of a selected instrument define a first set of parameters corresponding to the instrument.

A user may select a single instrument or multiple instruments by selecting one or a plurality of cells 502 and a buy or sell trade direction corresponding to each selected instrument. In an implementation, a user selected structured order may comprise multiple legs, where each leg comprises at least one instrument selected by selecting a cell 502 and a corresponding trade direction. A trade strategy corresponding to a structured order comprises one or more legs, with logical rules defining logical relationships among the instruments forming the legs.

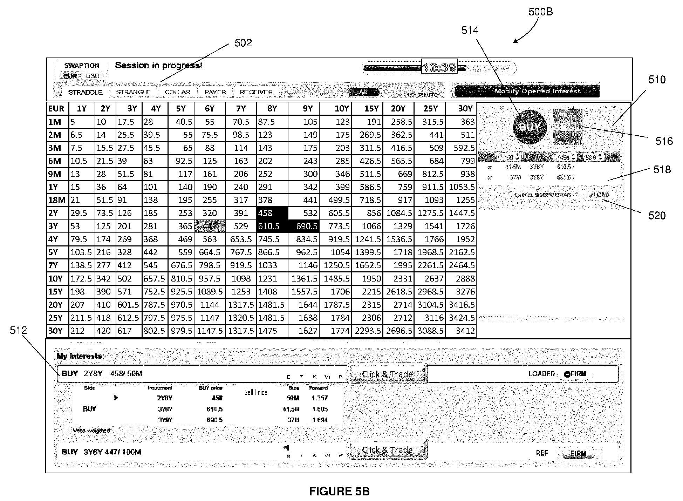

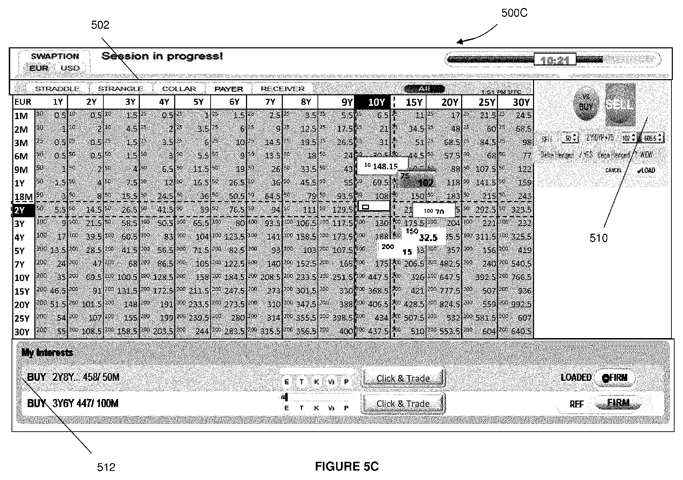

The screenshot 500A further illustrates a second area 510 for displaying a user selected structured order comprising one or more instruments having one or more parameters and a trade direction corresponding to each selected instrument, the instrument parameters and trade directions being editable by a user; and a third area 512 for displaying one or more selected structured orders comprising one or more instruments and corresponding instrument parameters; an editable status; a completion ratio corresponding to each order; and an interactive area corresponding to each displayed structured orders for suggesting the user to modify one or more parameters of one or more instruments corresponding to a structured order for obtaining a matching order, the suggestion being provided in real time based on an existing market configuration. The information conveyed via the second area 510 and the third area 512 is described later with reference to Figure 5B and 5C.

**Figure 5B** illustrates a screenshot 500A showing the second area 510 for displaying a user selected structured order comprising one or more instruments having one or more parameters and a trade direction corresponding to each selected instrument. The second area 510 displays a button 514 which upon being clicked by a user assigns a buy trade direction to a user selected instrument in the first area 502. The second area 510 also displays a button 516 which upon being clicked by a user assigns a sell trade direction to a user selected instrument in the first area 502. In case a user selects one or more instruments in the first area 502, wherein the first selected instrument corresponds to a buy trade direction, a label of button 514 reads 'BUY' whereas a label of button 516 is displayed as 'Vs. SELL'. Similarly, in case a user selects one or more instruments in the first area 502, wherein the first selected instrument corresponds to a sell trade direction, a label of button 516 reads 'SELL' whereas a label of button 514 is displayed as 'vs. BUY'. This dynamic display of BUY/vs BUY and SELL/vs SELL buttons enables the user to add further a second leg of opposite trade direction, thus defining a spread order. In the same way, the definition of a butterfly proceeds with the addition of a third leg. Doing this, the user defines his multi-leg strategy iteratively as he edits his order, without specifying an outright/spread/buttefly strategy as a first step. It allows quick edition and dynamic updating of an order, in case of a prompt.

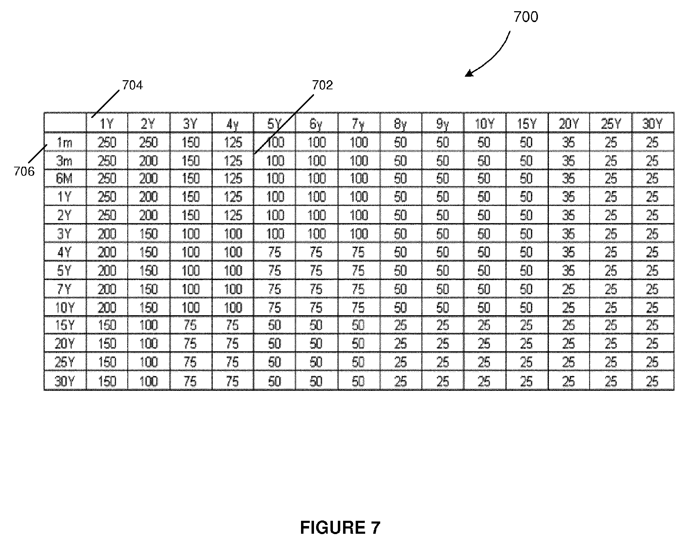

A sub-area 518 of the second area 510 allows a user to edit/modify a selected structured order which is displayed in the sub-area 518. The sub-area 518 displays all the instruments in the user selected structured order, corresponding first set of instrument parameters selected via the first area 502, trade directions of each instrument, and a second set of parameters fully describing the order. The second set of parameters comprises a standard market size, a set of sensitivities and a reference price for each instrument in the order. For example, in case of a swaption payer, the first set of parameters may include an expiry, a tenor and a strike of an instrument, whereas the second set of parameters may include a size and price of the instrument. In an implementation, a size of a selected instrument corresponding to a swaption class is determined by using a market size table such as depicted in Figure 7. Figure 7, illustrates a table 700 for determining market size of an instrument for an OTC transaction in millions of EUR, according to an implementation of the present subject matter. Referring now to Figure 7 table 700 comprises a plurality of cells 702, wherein each cell corresponds to expiries represented by row headers 706 and tenors by column headers 704.

Referring back to Figure 5B a user is allowed to modify one or more of the instrument parameters of the displayed instruments in the sub-area 518 of the second area 510. The user may edit the proposed sizes for this order, each instrument size being linked by the appropriate sensitivity ratio, according to the instrument and market practices. For instance, in an implementation, when defining a swaption straddle spread, the vega sensitivity is applied, whereas the vanna sensitivity is applied in case of a swaption collar (in interest markets, instruments are valued in a stochastic volatility model where "vega" is a measure of volatility risk and "vanna" is a measure of interest rate/volatility correlation risk). The user may edit the prices of every displayed instrument before validating his order. The second area 502 also provides a button 520 having a label with a display as 'LOAD', which upon clicking immediately validates and uploads the order. After loading an order, the user may firm it with a switch button in area 512 to make it tradable. He can switch again to a REF position to hold back his order. When updating a firmed order, button 520 displays a 'BLAST' label, meaning that no further confirmation is required.

**Figure 5C** illustrates a screenshot 500C showing the third area 512 allowing the selection of a three dimensional instrument, specifically a 2y into 10y payer swaption with a 75 bp out of the money strike, due to the unfolding of the cell at the 2y and 10y coordinates.

If the parameters of the instruments of two or more structured orders are within an admissible neighborhood implying that the values of the respective parameters lie within a permissible range of each other, a suggestion for modification of one or more of the parameters of a user selected structured order may be provided to the user, in order to cause the two or more orders to match. In an implementation, the suggestion may be provided via a GUI illustrating an interactive area that depicts each parameter requiring modification. In an implementation, suggestions provided to a user for modifying/editing one or more parameters of one or more instruments corresponding to a structured order for obtaining a matching order is provided via an interactive area displayed in a portion of the third area 512 of the GUI.

**Figure 6** depicts exemplary interactive areas with indicators that may be displayed to a user for providing suggestions for modifying/editing one or more parameters of one or more instruments corresponding to a structured order for obtaining a matching order. Interactive area 602 displays a 'BUY' label 604 displaying a trade direction of the selected order, a short description 606 comprising the main parameters of the selected order, a plurality of pellets and a gauge 608 for displaying the chances of matching of the selected order, and a 'REF/FIRM' button 612 for allowing a user to modify the status of the selected order. Interactive area 614 displays a 'Done%' 616 for providing information regarding a matching percentage of the selected order with one or more other orders, based on a matching of the corresponding instrument parameters of the orders.

In an implementation of the present subject matter, when at least one compatible order having instrument parameters lying within an acceptable neighborhood of the instrument parameters of the selected order is found, one or more pellets 608 light up to indicate the instrument parameter that may be modified by the user in order to obtain a matching order for trade completion. In an implementation, the pellets 608 comprise a pellet labeled 'E' depicting an expiry of the instrument, a pellet labeled 'K' depicting a strike of the instrument, a pellet labeled 'T' depicting a tenor of the instrument, a pellet labeled 'Vs', and a pellet labeled 'P' depicting a price of the instrument. The 'Vs' pellet depicts that an outright order matches one leg of a spread order, so that a second leg must be defined in order to complete the trade. In an implementation, suitable cells representing matching instruments corresponding to the second leg to be added may be highlighted in the first area 502 of the GUI, prompting the user to select the same for completion of the selected order.

Interactive area 618 displays a case where a pellet 'E' 620 and a pellet 'P' 622 are highlighted indicating that an expiry and a price of the selected instrument be made flexible or modified in order to obtain a matching order. Interactive area 624 displays a 'Click and trade' button in a highlighted state 626 for prompting a user to complete an OTC transaction with respect to the selected order. Interactive area 628 displays an 'Increase Size' button 630 for prompting a user to increase the size of the instruments in the selected order in order to increase the size of the transaction when the order has already matched.

Thus, the interactive area may display a matching indicator for each structured order for displaying a matching level that ranges from a minimum value indicating no possible match with any other structured order to a maximum value indicating a full match with one or more available structured order, a full match indicating a fulfillment of logical rules represented by corresponding strategy trees of the matching structured orders. This indicator may take into account available authorized counterparts, transaction types, structure logics, optional hedges, instruments, sizes, prices and degrees of similarity with the structured order in consideration, in the same metric as that defining the admissible neighborhood. It allows assessing the chances of trading of a structured order in one glance, by aggregating all relevant market information.

Further, in various implementations, the interactive area may display a set of colored indicators corresponding to one or more instrument parameters corresponding to a user selected structured order for prompting the user to modify the one or more instrument parameters for obtaining a matching structured order, the colored indicators being based on a plurality of structured orders comprising instruments having instrument parameters lying within an admissible neighborhood of the one or more user selected instruments parameters. These colored indicators may correspond to dimensions defining instruments, to negotiation parameters such as price or to strategy type to prompt the user to alter his structured order to improve his chances of matching. In case of a low liquidity market where tierce party trade directions and order prices are hidden to prevent adverse selection, such a communication mechanism conveys only relevant and targeted information to concerned users. Such a mechanism may be completed by a second communication layer where the exact required modification is disclosed if orders are in a direct neighborhood, for example, fraction of the admissible neighborhood.

Hence, in various implementations the present subject matter provides a platform for handling OTC transactions including tangible products, tangible goods, services, commodities, stocks and other financial instruments that is intelligent, flexible and efficient while providing features similar to those provided by a human trade broker. Although platform for handling OTC transactions have been described in language specific to structural features and/or methods, it is to be understood that the invention is not necessarily limited to the specific features or methods described. Rather, the specific features and methods are disclosed and explained in the context of a few implementations for the flexible, intelligent and efficient handling of OTC transactions.

## Claims

1. A method, implemented by an OTC transaction platform and executed by a processor of a server implementing the OTC transaction platform, for handling OTC transaction requests in real time, the method comprising:
receiving, by the processor of the server, one or more structured orders from a plurality of computing devices, each order comprising one or more instruments of a transaction type corresponding to an instrument class, and a trade direction of each instrument;
determining, by the processor of the server, one or more parameters corresponding to each instrument of each of the structured orders, the one or more parameters comprising at least a size and a market price of an instrument;
determining, by the processor of the server, strategy trees corresponding to the structured orders, each strategy tree depicting one or more logical relations among each instrument in the corresponding structured order, wherein each strategy tree comprises one or more nodes defining logical rules, trade directions, and size ratio rules, and further comprises one or more instruments as leaves of the tree;
determining, by the processor of the server, in real time, all matching orders among said plurality of structured orders for maximizing a cumulative volume of OTC transactions, wherein the matching orders comprise a first and a second set of instruments having compatible market prices and reverse trade directions, and wherein each logical rule defined by each of the nodes of the matching orders is satisfied.

2. The method as claimed in claim 1 further comprising providing, by the OTC transaction platform, a prompt to modify one or more parameters of a set of instruments of a first structured order for achieving OTC transactions corresponding to the first structured order, if no matching structured order corresponding to the first structured order is determined and if the one or more parameters of the set of instruments lies within an admissible neighborhood of one or more corresponding parameters of a set of instruments corresponding to a second structured order.

3. The method as claimed in claim 1, wherein determining one or more parameters corresponding to each instrument comprises selecting a first set of parameters and determining a subsequent second set of parameters based on a pricing system comprising a market database and one or more valuation methods.

4. The method as claimed in claim 2, wherein an admissible neighborhood is a volume around an instrument in the parameter space determined on one or more parameters of the instruments, wherein the admissible neighborhood is determined by the processor based on resemblance of the parameters for each dimension and relative contributions of the parameters across dimensions.

5. The method as claimed in claim 1, wherein a strategy tree comprises one or more logical nodes and one or more leaf nodes depicting the instruments of a structured order, a logical node depicting a trade direction, a size ratio rule and a logical AND or OR operation among one or more subsequent nodes, a strategy tree defining one or more logical rules for completion of OTC transactions of the instruments of the structured order.

6. The method as claimed in claim 5, wherein determining, in real time, all matching orders among said plurality of structured orders for maximizing a cumulative volume of OTC transactions comprises matching a structured order with multiple structured orders wherein logical rules defined by strategy trees corresponding to each of the structured orders are satisfied.

7. An OTC transaction platform for the implementation of the method according to one of the claims 1-7, comprising a graphical user interface (GUI) for receiving structured orders comprising one or more instruments of a transaction type corresponding to an instrument class, the GUI comprising:
a first area depicting a grid having a plurality of cells representing selectable instruments corresponding to parameters depicted by row and column headers of the grid and a third parameter embedded in each cell being displayed upon an unfolding of the cell, wherein selection of one or more cells depicts selection of corresponding instruments in a structured order for an OTC transaction;
a second area displaying a selected structured order comprising one or more instruments having one or more parameters and a trade direction corresponding to each selected instrument, the instrument parameters and trade directions being editable by a user; and
a third area displaying: one or more selected structured orders comprising one or more instruments and corresponding instrument parameters; an editable status; a completion ratio corresponding to each order; and an interactive area corresponding to each displayed structured orders for suggesting the user to modify one or more parameters of one or more instruments corresponding to a structured order for obtaining a matching order, the suggestion being provided in real time based on an existing market configuration.

8. The OTC transaction platform as claimed in claim 7, wherein a proximity of two cells in the grid is based on a proximity between the parameters depicted by the cells, an interval between instrument parameters corresponding to a first cell and a second adjacent cell being defined as a neighborhood.

9. The OTC transaction platform as claimed in claim 7, wherein the grid displays a colored map displaying: each instrument selected by a user and a corresponding trade direction, the selected instruments forming a structured order, each trade direction being displayed in a specific color; and structured orders selected by one or more other users, the structured orders corresponding to different transaction types being displayed using different colors.

10. The OTC transaction platform as claimed in claim 7, wherein the second area comprises dynamic buy and sell buttons for prompting a user to define iteratively a structured order comprising multiple legs with possibly multiple alternative instruments in each leg, wherein relationships among the instruments depict strategies corresponding to a transaction type and class of the instruments.

11. The OTC transaction platform as claimed in claim 7, wherein the second area displays user selected instruments forming a structured order, a relationship among the instruments defining a principal leg and one or more mandatory or facultative legs of the structured order, the facultative legs being executed if and only if the principal leg is executed.

12. The OTC transaction platform as claimed in claim 7, wherein the third area displays for each selected structured order one of: a folded representation of the structured order displaying a short description of the structured order in a compact style; and an unfolded representation of the structured order displaying each selected instruments and instrument parameters corresponding to the structured order.

13. The OTC transaction platform as claimed in claim 7, wherein the interactive area displays a matching indicator for each structured order for displaying a matching level that ranges from a minimum value indicating no possible match with any other structured order to a maximum value indicating a full match with one or more available structured order, a full match indicating a fulfillment of logical rules represented by corresponding strategy trees of the matching structured orders.

14. The OTC transaction platform as claimed in claim 7, wherein the interactive area may displays a set of colored indicators corresponding to one or more instrument parameters corresponding to a user selected structured order for prompting the user to modify the one or more instrument parameters for obtaining a matching structured order, the colored indicators being based on a plurality of structured orders comprising instruments having instrument parameters lying within an admissible neighborhood of the one or more user selected instruments parameters.

15. A server comprising:
a processor;
a GUI front end module, coupled to the processor, to receive one or more structured orders from a plurality of users, each order comprising one or more instruments of a transaction type corresponding to an instrument class, and a trade direction of each instrument;
a trading services module (110), coupled to the processor, to determine one or more parameters corresponding to each instrument of each of the structured orders, the one or more parameters comprising at least a size and a market price of an instrument; and
a matching engine (112), coupled to the processor, to
determine strategy trees corresponding to the structured orders, each strategy tree depicting one or more logical relations among each instrument in the corresponding structured order, wherein each strategy tree comprises one or more nodes defining logical rules, trade directions, and size ratio rules, and further comprises one or more instruments as leaves of the tree; and
determine, in real time, all matching orders among said plurality of structured orders for maximizing a cumulative volume of OTC transactions, wherein the matching orders comprise a first and a second set of instruments having compatible market prices and reverse trade directions, and wherein each logical rule defined by each of the nodes of the matching orders is satisfied.
